# EUROPÄISCHE PATENTSCHRIFT

(11) **EP 0 463 509 B1**
(45) Veröffentlichungstag und Bekanntmachung des Hinweises auf die Patenterteilung: **19.07.1995**
(21) Anmeldenummer: 91109779.8
(22) Anmeldetag: 14.06.1991
(51) Int. Cl.: G01N 27/90, G01B 3/30, G01B 7/28

(54) **Fehlernormal für einen Innenrotiergeber**
Defect standard for a rotating internal inspection probe
Etalon de défauts pour un capteur rotatif d'inspection interne

(30) Priorität: 22.06.1990 DE 9006978 U
(43) Veröffentlichungstag der Anmeldung: 02.01.1992
(73) Patentinhaber: Institut Dr. Friedrich Förster Prüfgerätebau GmbH & Co. KG, 72766 Reutlingen (DE)
(72) Erfinder: Endress, Heribert, W-7400 Tübingen 5 (DE)
(74) Vertreter: Patentanwälte Ruff, Beier, Schöndorf und Mütschele

(56) Entgegenhaltungen:
- DE-U- 8 908 864
- US-A- 3 718 855
- US-A- 4 425 545
- N.T.I.S TECHNICAL NOTES 1986,MAY,NO.5,PART K SPRINGFIELD,VIRGINIA,USA. PAGE549. "INEXPENSIVE EDDY -CURRENT STANDARD"
- PATENT ABSTRACTS OF JAPAN vol. 9, no. 253 (P-395)(1976) 11. Oktober 1985& JP-A-60 104 209

## Beschreibung

Die Erfindung betrifft ein Fehlernormal für einen Innenrotiergeber, bestehend aus einem Klotz mit einer rotationssymmetrischen Öffnung zum Einführen des Innenrotiergebers und aus einer Fehlernachbildung in der Wandung der Öffnung.

Innenrotiergeber werden in der zerstörungsfreien Werkstoffprüfung zum Untersuchen von Bohrungen, z. B. von Nietlöchern bei der Flugzeugwartung, eingesetzt. Man bedient sich dabei der bekannten Verfahren der zerstörungsfreien Werkstoffprüfung, insbesondere des Wirbelstromprüfverfahrens. Im letzteren Falle ist eine Wirbelstromtastsonde in einen rotierenden Schaft eingebaut, der in die Bohrung eingeführt wird und so eine kontinuierliche, spiralige Abtastung der Wand der Bohrung durch die Tastsonde ermöglicht. Auf diese Weise können kleinste Fehler in der Wand der Bohrung nachgewiesen und geortet werden, z. B. Risse mit einer Tiefe in der Größenordnung von 0,05 mm. Ein Innenrotiergeber dieser Art ist beispielsweise in GM 8 908 864 beschrieben. Zum Einrichten und Justieren der Innenrotiergeber benutzt man Fehlernormale der oben angegebenen Art. Die bekannten Fehlernormale besitzen eine zylindrische Bohrung, in die der rotierende Schaft des Innenrotiergebers eingeführt werden kann und in deren Wand die Fehlernachbildung, z. B. in Form eines Längs- oder Quernut eingegraben ist (siehe US-A- 4425545).

Mit den bisher bekannten Fehlernormalen verbindet sich der Nachteil, daß sie recht genau zum Innenrotiergeber passen müssen, dem sie zugeordnet sind, d. h. daß der Durchmesser der Bohrung des Fehlernormals nur geringfügig größer sein darf als der Durchmesser des Schaftes des zugehörigen Innenrotiergebers. Man benötigt so praktisch zu jedem Geber ein passendes Normal. Bei Abstufung der Geberdurchmesser in Schritten von 0,1 mm ergibt sich eine stattliche Anzahl von notwendigen Normalen. Die sogenannten gespreizten Innenrotiergeber, bei denen im Gegensatz zu den oben beschriebenen starren Innenrotiergebern die Sonde durch Federdruck an die Innenwand der Bohrung des Prüfteils bzw. des Fehlernormals gedrückt wird, ermöglichen eine gröbere Abstufung. Immerhin ist aber auch noch hier eine große Anzahl von Fehlernormalen erforderlich.

Die Erfindung stellt sich die Aufgabe, ein Fehlernormal zu schaffen, das für einen weiten Durchmesserbereich von Innenrotiergebern brauchbar ist.

Diese Aufgabe wird gelöst, indem man der rotationssymmetrischen Öffnung des Fehlernormals die Form eines Kegels gibt.

Der große Vorteil der erfindungsgemäßen Fehlernormale ist, daß man sie in einem weiten Durchmesserbereich von Innenrotiergebern einsetzen kann, dessen Grenzen im wesentlichen durch den größten und kleinsten Kegeldurchmesser bestimmt werden. Als besonders günstig hat es sich erwiesen, wenn die Fehlernachbildung in einer entlang einer Mantellinie des Kegels verlaufenden Nut besteht, wenn also ein Längsriß nachgebildet wird. In diesem Falle kann man den Schaft des Innenrotiergebers soweit in die kegelförmige Öffnung des Fehlersnormales hineingleiten lassen bis das vordere Ende des Schaftes Berührung mit der Wandung der Öffnung hat. Wenn man jetzt noch den Schaft an der Kegelwand anliegen läßt, ihn also parallel zu einer Mantellinie ausrichtet, dann ergibt sich ein absolut ruhiger und wackelfreier Lauf des Innenrotiergebers, wie man ihn nur in einer äußerst genau passenden zylindrischen Bohrung erreichen könnte. Natürlich können auch, bei nicht so hohen Anforderung, andere Formen von Fehlernachbildungen, wie eine Quernut oder ein Bohrloch zur Anwendung kommen. Als vorteilhaft hat sich auch gezeigt, die Fehlernachbildung an der von der Eingangsseite der Öffnung gesehenen rechten Seite der Wandung vorzusehen. Bei den üblicherweise rechts umlaufenden Innenrotiergebern zieht dann der rotierende Schaft automatisch nach rechts und liegt so gut an der Wandung an. Vorteile für die Ausrichtung des Innenrotiergebers ergaben sich auch daraus, daß man die Achse des Kegels exakt parallel zur Auflagefläche des Fehlernormals verlaufen läßt, insbesondere dann, wenn die Höhe der Achse des Kegels über der Auflagefläche der Höhe der Achse des Schaftes des Innenrotiergebers über dessen Grundfläche entspricht. Kommen unterschiedliche Innenrotiergeber in Frage, so kann eine Anpassung der Höhen erfolgen, indem man mehrere Auflageflächen mit jeweils unterschiedlichem Abstand zwischen der Achse des Kegels und der Auflagefläche vorsieht. Als besonders vorteilhaft für den Anstiegswinkel des Kegels hat sich der Bereich zwischen 4° und 8° erwiesen, wo sich ein guter Kompromiß ergibt zwischen den auseinander laufenden Interessen für einerseits möglichst großen Durchmesserbereich, andererseits gute Manipulierbarkeit.

Im folgenden wird die Erfindung an Anwendungsbeispielen und mit Hilfe einiger Figuren näher erläutert. Es zeigen im einzelnen:
Figur 1 ein Längsrißfehlernormal
Figur 2 einen Schnitt durch das Letztere
Figur 3 ein Querrißfehlernormal
Figur 4 ein Lochfehlernormal
Figur 5 ein Fehlernormal mit einem Innenrotiergeber

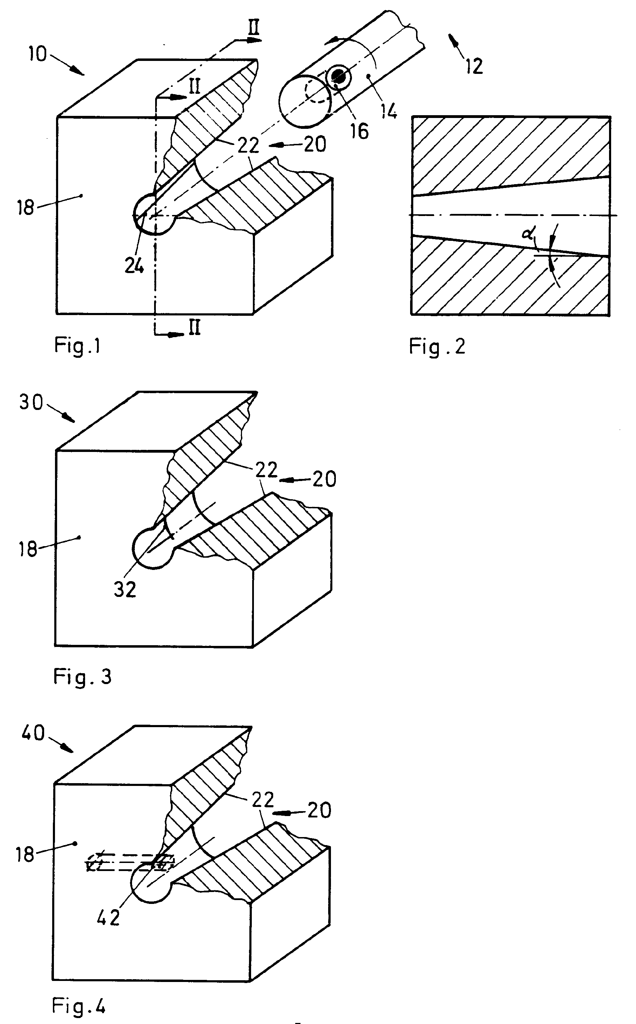

In Figur 1 ist ein Fehlernormal 10 dargestellt, während Figur 2 einen senkrechten Schnitt durch das Fehlernormal zeigt. Dieses findet im vorliegenden Beispiel Anwendung bei einem Wirbelstrominnenrotiergeber 12, von dem hier nur die Spitze des Rotierschaftes 14 und die darin eingebaute Wirbelstromsonde 16 zu erkennen ist. Das Fehlernormal 10 besteht aus einem metallischen Klotz 18, mit einer durchgehenden Öffnung 20, die die Form eines Kegels 22 einnimmt. In der Wandung der Öffnung 20, entlang einer Mantellinie des Kegels 22, ist eine Nut 24 erodiert, die im vorliegenden Beispiel eine Breite von 0,1 mm und eine gleichbleibende Tiefe von 0,3 mm aufweisen soll und die einem Längsriß entsprechender Abmessungen nachgebildet ist. Das im Beispiel dargestellte Fehlernormal 10 hat einen nutzbaren Durchmesserbereich von 11 bis 19 mm. Geht man von einer Abstufung von 0,1 mm aus, so ersetzt das Fehlernormal 10 die große Anzahl von 80 Normalen mit zylindrischer Bohrung. Das wird bei der vorgegebenen Länge des Fehlernormales von 5 cm mit einem Kegelsteigungswinkel alpha = 6 ° erreicht. Bei der Anwendung des Fehlernormals 10 läßt man den Schaft 14 des Innenrotiergebers 12 soweit in die Öffnung 20 hineingleiten, bis dessen Spitze Berührung mit der kegelförmigen Wandung der Öffnung 20 hat und die Außenfläche des Schaftes 14 an der Mantellinie des Kegels 22 mit der Nut 24 anliegt. Neben einem ruhigen Lauf des Innenrotiergebers 12 erzielt man so den kleinstmöglichen Abstand der Sonde 16 von der Fehlernachbildung durch Nut 24. Darüberhinaus bleibt die Sonde 16 auch während ihres weiteren Umlaufs auf Grund des relativ kleinen Kegelsteigungswinkels von 6° in der unmittelbaren Nähe der metallischen Wandung, was bei Wirbelstrominnenrotiergebern von Bedeutung sein kann.

Figur 3 zeigt ein Fehlernormal 30 mit den gleichen Abmessungen des Klotzes 18 und der Öffnung 20 in Form des Kegels 22. Im Inneren der Öffnung 20 ist eine Quernut 32 erodiert, die als Nachbildung eines Querrisses dienen kann. Bei der Anwendung des Fehlernormals 30 läßt man die Außenfläche des Schaftes 14 des Innenrotiergebers 12 entlang einer die Quernut 32 berührenden Mantellinie des Kegels 22 gleiten. Die genaue Lage der Quernut ergibt sich bei maximaler Signalanzeige.

In Figur 4 ist ein Fehlernormal 40 abgebildet. Seine Abmessungen entsprechen denen der Fehlernormale 10 und 30. Als Fehlernachbildung ist hier ein Bohrloch 42 vorgesehen. Die Anwendung ist die gleiche wie bei Fehlernormal 30.

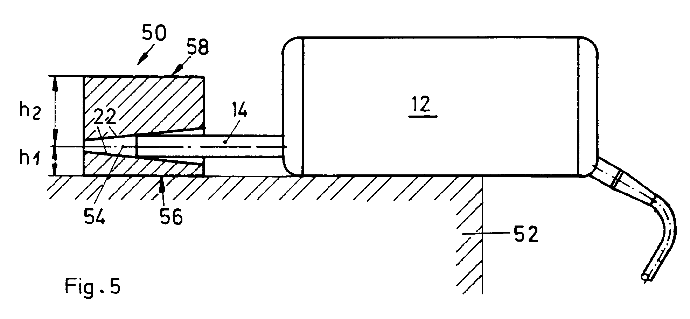

Figur 5 gibt ein Fehlernormal 50 bei der Anwendung mit dem Innenrotiergeber 12 wieder. Beide befinden sich auf einem ebenen Tisch 52. Die Achse 54 des Kegels 22 nimmt eine Höhe h1 über der Auflagefläche 56 des Fehlernormals 50 ein, wie sie durch die Höhe der Achse des Schaftes 14 des Innenrotiergebers 12 vorgegeben ist. Dadurch ergibt sich eine besonders einfache Handhabung des Fehlernormals 50. Dieses besitzt noch eine weitere Auflagefläche 52 mit einer Höhe h2 der Kegelachse, die an einen anderen Innenrotiergeber angepaßt ist.

Wie schon eingangs erwähnt gibt es außer den bisher dargestellten starren Innenrotiergebern 12 auch die sogenannten gespreizten Geber. Diese können mehrere Sonden aufweisen, die durch Federdruck an die Wand einer zu untersuchenden Bohrung gedrückt werden. Abweichend vom bisher Gesagten, soll bei der Anwendung der beschriebenen Fehlernormale auf solche Geber die Achse des rotierenden Schaftes möglichst mit der des Kegels 22 zusammenfallen.

## Patentansprüche

1. Fehlernormal für einen Innenrotiergeber, bestehend aus einem Klotz mit einer rotationssymmetrischen Öffnung zum Einführen des Innenrotiergebers und aus einer Fehlernachbildung in der Wandung der Öffnung, dadurch gekennzeichnet,
daß die Öffnung (20) die Form eines Kegels (22) aufweist.

2. Fehlernormal nach Anspruch 1, dadurch gekennzeichnet,
daß die Fehlernachbildung in einer entlang einer Mantellinie des Kegels (22) verlaufenden Nut (24) besteht.

3. Fehlernormal nach Anspruch 1, dadurch gekennzeichnet,
daß die Fehlernachbildung in einer quer zur Achsrichtung des Kegels (22) verlaufenden Nut (32) besteht.

4. Fehlernormal nach Anspruch 1, dadurch gekennzeichnet,
daß die Fehlernachbildung in einem Bohrloch (42) besteht.

5. Fehlernormal nach einem der vorhergehenden Ansprüche, dadurch gekennzeichnet,
daß die Fehlernachbildung sich an der von der Eingangsseite gesehenen rechten Seite der Öffnung (20) befindet.

6. Fehlernormal nach einem der vorhergehenden Ansprüche, dadurch gekennzeichnet,
daß die Achse des Kegels (22) exakt parallel zur Auflagefläche (56, 58) des Fehlernormals (50) verläuft.

7. Fehlernormal nach einem der vorhergehenden Ansprüche, dadurch gekennzeichnet,
daß das Fehlernormal mehrere Auflageflächen (56, 58) mit jeweils unterschiedlichem Abstand zwischen der Achse des Kegels (22) und der jeweiligen Auflagefläche (56, 58) aufweist.

8. Fehlernormal nach einem der vorhergehenden Ansprüche, dadurch gekennzeichnet,
daß der Anstiegswinkel des Kegels (22) zwischen 4° und 8° liegt.

## Claims

1. Defect standard for a rotating internal inspection probe, comprising a block with a rotationally symmetrical opening for the insertion of the rotating internal inspection probe and a defect simulation in the wall of the opening, characterized in that the opening (20) is shaped like a cone (22).

2. Defect standard according to claim 1, characterized in that the defect simulation comprises a groove (24) running along a generatrix of the cone (22).

3. Defect standard according to claim 1, characterized in that the defect simulation comprises a groove (32) running transversely to the axial direction of the cone (22).

4. Defect standard according to claim 1, characterized in that the defect simulation comprises a hole (42).

5. Defect standard according to any one of the preceding claims, characterized in that the defect simulation is located on the right-hand side of the opening (20) seen from the inlet side.

6. Defect standard according to any one of the preceding claims, characterized in that the axis of the cone (22) is exactly parallel to the bearing surface (56, 58) of the defect standard (50).

7. Defect standard according to any one of the preceding claims, characterized in that the defect standard has several bearing surfaces (56, 58) with in each case different spacings between the axis of the cone (22) and the particular bearing surface (56, 58).

8. Defect standard according to any one of the preceding claims, characterized in that the pitch angle of the cone (22) is between 4 and 8°.

## Revendications

1. Etalon de défauts pour un capteur rotatif interne, constitué d'un bloc avec une ouverture à symétrie de révolution pour l'introduction du capteur rotatif interne et d'une simulation de défaut dans la paroi de l'ouverture, caractérisé en ce que l'ouverture (20) a la forme d'un cône (22).

2. Etalon de défauts selon la revendication 1, caractérisé en ce que la simulation de défaut est constituée d'une rainure (24) s'étendant le long d'une génératrice du cône (22).

3. Etalon de défauts selon la revendication 1, caractérisé en ce que la simulation de défaut est constituée d'une rainure (32) s'étendant transversalement à la direction axiale du cône (22).

4. Etalon de défauts selon la revendication 1, caractérisé en ce que la simulation de défaut est constituée d'un trou (42).

5. Etalon de défauts selon l'une des revendications précédentes, caractérisé en ce que la simulation de défaut se trouve sur le côté droit de l'ouverture (20), vue à partir du côté d'entrée.

6. Etalon de défauts selon l'une des revendications précédentes, caractérisé en ce que l'axe du cône (22) est exactement parallèle à la surface d'appui (56, 58) de l'étalon de défauts (50).

7. Etalon de défauts selon l'une des revendications précédentes, caractérisé en ce que l'étalon de défauts présente plusieurs surfaces d'appui (56, 58) avec chacune une distance différente entre l'axe du cône (22) et la surface d'appui (56, 58) respective.

8. Etalon de défauts selon l'une des revendications précédentes, caractérisé en ce que l'angle de montée du cône (22) se situe entre 4° et 8°.
